# EUROPEAN PATENT SPECIFICATION

(11) **EP 1 728 396 B1**
(45) Date of publication and mention of the grant of the patent: **08.10.2008**
(21) Application number: 04722168.4
(22) Date of filing: 20.03.2004
(51) Int. Cl.: H04Q 3/00

(54) **METHOD AND NETWORK NODE FOR A CALL SET UP**
VERFAHREN UND NETZKNOTEN FÜR DEN VERBINDUNGSAUFBAU
PROCEDE ET NOEUD DE RESEAU DESTINE A L'ETABLISSEMENT D'UNE COMMUNICATION

(43) Date of publication of application: 06.12.2006
(73) Proprietor: TELEFONAKTIEBOLAGET LM ERICSSON (publ), 164 83 Stockholm (SE)
(72) Inventor: FIEDLER, Dietmar, 02760 Espoo (FI); PERTTULA, Karl-Pekka, 02770 Espoo (FI)
(74) Representative: von Zmuda-Trzebiatowski, Margarethe
(86) International application number: PCT/EP2004/002962
(87) International publication number: WO 2005/091652

(56) References cited:
- WO-A-01/49045
- US-A- 5 434 852

## Description

### Field of invention

The invention relates to a method and a node for a call setup in a telecommunication network in that call control signalling and bearer connectivity are separated.

### Description of prior art

Recently the evolution of telecommunication networks has brought up a concept in that call control and bearer connectivity are separated, i.e. the task of call control signaling and the task of providing bearer connectivity are performed by different kinds of nodes, Said concept is described in the Technical Specification TS 23.002 of the 3GPP (3^{rd} Generation Partnership Project) and sometimes referred to as split architecture. According to the new concept call control nodes termed MSC (Mobile Services Switching Centre) Server or MGCs (Media Gateway Controllers) are introduced in a telecommunication network that are responsible for performing call control signaling and for the reservation of resources such as codecs and bearers that are used for the call that is set up. The resources are provided by network nodes providing bearer connectivity termed MGWs (Media GateWays). To control a MGW by a MSC Server or an MGC a GCP (Gateway Control Protocol) has been developed and standardized as H.248 protocol of the ITU (International Telecommunication Union). A network architecture separating call and bearer control is described in US-A-5 434 852.

According to the state of the art at connection set up resources are reserved independently on a node providing bearer connectivity within the telecommunication network. If resources have to be connected this is an inefficient use of resources as it is likely that connections to external nodes are used for connecting resources in a network node and resources are used inefficiently.

### Object of the invention

Therefore it is object of the invention to provide an efficient method for establishing a connection in a telecommunication network in that call control signaling and bearer connectivity are separated.

### Summary of the invention

This is object is achieved by the method of claims 1 and 2. The invention is also embodied in the call control node of claim 6 and the network node for providing bearer connectivity of claim 8. Advantageous embodiments are described in the dependent claims.
In accordance with the teachings of the present invention a method is provided for establishing a connection in a telecommunications network in that call control and bearer connectivity are separated. The telecommunications network comprises a plurality of logical nodes providing bearer connectivity within the telecommunication network, the plurality of logical nodes are implemented on a common physical node, and the invented method comprises the steps of:
- determining an identification of the connection,
- sending a first message requesting a creation or a reservation of a first resource, and a second message requesting a creation or a reservation of a second resource to the plurality of logical nodes, the first and the second message comprising the identification of the connection,
- creating or reserving the first and the second resource,
- comparing the identification received in the first message with the identification received in the second message, and - according to the result of the comparison connecting the first and the second resource using a connection internal to the common physical node.
   Further in accordance with the teachings of the present invention a method is provided for controlling establishing a connection in a telecommunications network in that call control and bearer connectivity are separated. The method is performed by a call control node, and the method comprises the steps of:

- determining an identification of the connection, and
- sending a first message requesting a creation or a reservation of a first resource and a second message requesting a creation or a reservation of a second resource to a plurality of logical nodes providing bearer connectivity within the telecommunications network, the first and the second message comprising the identification of the connection.

In accordance with the present invention the first message is sent towards a first of the plurality of logical nodes and the second message is sent towards a second of the plurality of logical nodes.

This is advantageous as the method can be applied to the efficient implementation of multiple logical nodes on a common physical node.

In a further embodiment of the invention a method is provided for establishing a connection in a telecommunications network in that call control and bearer connectivity are separated. The telecommunications network comprises a plurality of logical nodes providing bearer connectivity within the telecommunications network, wherein the plurality of logical nodes are implemented on a common physical node. The invented method comprises the steps of:
- receiving a first message requesting a creation or a reservation of a first resource and a second message requesting a creation or a reservation of a second resource, the first and the second message comprising an identification of the connection,
- creating or reserving the first and the second resource,
- comparing the identification received in the first message with the identification received in the second message, and
- according to the result of the comparison connecting the first and the second resource using a connection internal to the common physical node. In other words, if the indications match, the first and the second resource are connected using a connection internal to the common physical node.

In an advantageous embodiment of this method a first of the plurality of logical nodes and a second of the plurality of logical nodes are implemented on the common physical node. The first message is received in the first logical node, the second message is received in the second logical node, the first resource is created or reserved on the first logical node, the second resource is created or reserved on the second logical node, and the connecting the first and the second resource comprises connecting the first and the second logical node.

This is advantageous as the method can be applied to the efficient implementation of multiple logical nodes on a common physical node.

In an advantageous embodiment of the method the one or more logical nodes are implemented on a plurality of processing devices of the common physical node, and according to the result of the comparison the first and the second resource are created on the same processing device. In other words, if the indications match the first and the second resource are created on the same processing device.

By this the first and the second resource can utilize an efficient communication internal to the common processing device, on that they are created.

Further in accordance with the teachings of the present invention a call control node is provided for controlling establishing a connection in a telecommunications network in that call control and bearer connectivity are separated. The call control node comprises a processing device for processing and generating messages and one or more signalling interfaces towards one or more network nodes for providing bearer connectivity within the telecommunications network. The call control node is remarkable in that the processing device is adapted to determine during a connection set up an identification of the connection and to send a first message requesting a creation or a reservation of a first resource and a second message requesting a creation or a reservation of a second resource towards the one or more network nodes, the first and the second message comprising the identification of the connection wherein the first message is sent towards a first of the one or more logical nodes and the second message is sent towards a second of the one or more logical nodes, the first and the second message comprising the identification of the connection.

In yet another embodiment of the invention a network node is provided for providing bearer connectivity within a telecommunications network in that call control and bearer connectivity are separated. The network node comprises one or more logical nodes, one or more interfaces for receiving call control messages for the plurality of logical nodes, a processing unit, and a comparison unit, the plurality of logical nodes being adapted to process a received first message requesting a creation or a reservation of a first resource and a received second message requesting a creation or a reservation of a second resource, the first and the second message comprising an identification of a connection The plurality of logical nodes are further adapted to create or reserve the first and the second resource, the comparison unit is adapted to compare the indication received in the first message with the identification received in the second message, and the processing unit is adapted to connect the first and the second resource using a connection internal to the network node according to the result of the comparison. In other words, if the indications match the first and the second resource are connected using a connection internal to the network node.

In an advantageous embodiment of this network node a first of the plurality of logical nodes and a second of the plurality of logical nodes are implemented on the network node as a common network node. The first logical node is adapted to process the first message and to create or reserve the first resource and the second logical node is adapted to process the second message and to create or reserve the second resource. The processing unit is adapted to connect the first and the second logical node using a connection internal to the network node according to the result of the comparison.

This is advantageous as the method can be applied to the efficient implementation of multiple logical nodes on a common physical node.

In a further advantageous embodiment of the network node it comprises a plurality of processing devices on that the first or the second resource may be created or reserved and a selection unit for distributing requested resources on processing devices, i.e. for selecting a processing device on that a requested resource is created or reserved. The selection unit is adapted to select according to the result of the comparison a common processing device on that first and the second resource are created or reserved.

By this the first and the second resource can utilize an efficient communication internal to the common processing device, on that they are created.

In the above description as well as in the embodiments described below the first and the second resource may be a first and a second context or a first and a second bearer termination. The call control node can be a Media Gateway Controller or MSC Server and the first and second message could be sent according to the GCP (Gateway Control Protocol). To that a new parameter could be included in respective GCP commands. To indicate the newly introduced parameter towards bearer connectivity nodes controlled by different call control nodes, the newly introduced parameter may be sent between said different call control nodes.

### Brief description of the drawings

Fig. 1 depicts a network node providing bearer connectivity within a network according to a first embodiment of the invention.
Fig. 2 depicts a network node providing bearer connectivity within a network according to a further embodiment of the invention.
Fig. 3 depicts a call control node according to the invention

### Detailed description of the embodiments

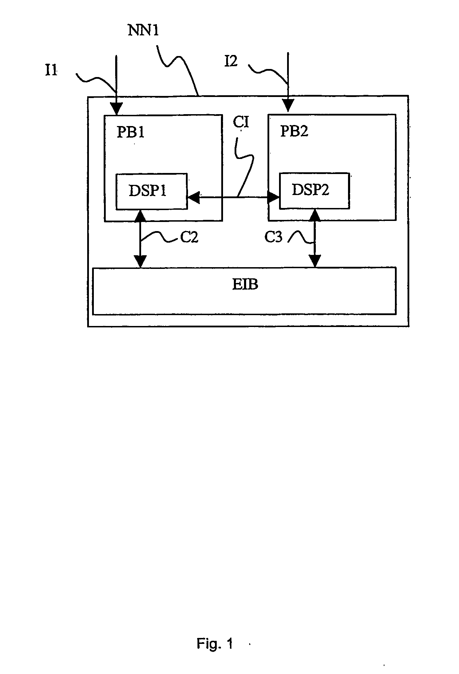

Figure 1 depicts a network node NN1 for providing bearer connectivity within a telecommunication network in that call control and bearer connectivity are separated. A plurality of logical nodes are implemented on the network node NN1. Hardware resources or software resources are dedicated to a particular of the plurality of logical nodes or hardware or software resources are used commonly by the plurality of logical nodes. In particular the hardware resources comprise a first physical board PB1 comprising a first digital signal processor DSP1 and a second physical board PB2 comprising a second digital signal processor DSP2. The first and the second digital signal processor DSP1 and DSP2 are connected to each other using an internal connection C1.

The first digital signal processor DSP1 is connected using a second connection C2 to an external interface bus EIB providing connectivity to external nodes within the telecommunication network. Accordingly the second digital signal processor DSP2 is connected using a third connection C3 to an external interface bus EIB providing connectivity to external nodes within the telecommunication network.

If a bearer is set up to an external node within the telecommunication network, the second or the third connection C2 or C3 to the external interface bus EIB are used.

The network node comprises a first interface I1 for receiving call control messages and a second interface I2 for receiving call control messages. The first interface I1 may be used by a first of the plurality of logical nodes and the second interface 12 may be used by a second of the plurality of logical nodes. During a connection set up a first message requesting a creation or a reservation of a resource up is received via the first interface I1 and a second message requesting a creation or a reservation of a resource is received via the second interface 12.

According to the reception of the first message resources are created or reserved for the connection to be set up. Such resources are e.g. a bearer termination or a context for one or more bearer terminations comprising the created or reserved bearer termination. Advantageously the reception of the first message and/or the creation and the reservation of the resources are acknowledged. Furthermore an indication of the plurality of created resources is advantageously returned towards the node issuing the first message. The first message comprises an indication of a connection or the bearer that is to be set up. Advantageously the indication for the connection or the bearer is stored related to the resources that are created or reserved for the bearer.

Similarly resources are created or reserved according to the reception of the second message. The reception of the second message and/or the creation or the reservation of the resources are advantageously acknowledged towards the network node issuing the second message. Furthermore the second logical node advantageously returns an indication of the created or reserved resources towards the node issuing the second message. The second message comprises an indication of a connection or the bearer that is to be set up. Advantageously the indication for the connection or the bearer are stored related to the created or reserved resources.

According to the invention the first and the second processor board PB 1 and PB2 are adapted to exchange the indication for the connection and to compare the indication for the connection received in the first message with the indication received in the second message. If the indications match the internal connection C1 is used to connect the first and the second processor board PB1 and PB2. In the case that the first message is for the first logical node and the second message is for the second logical node , said connecting may comprise creating a bearer between the first and the second logical node and to use the connection C1 for the bearer.

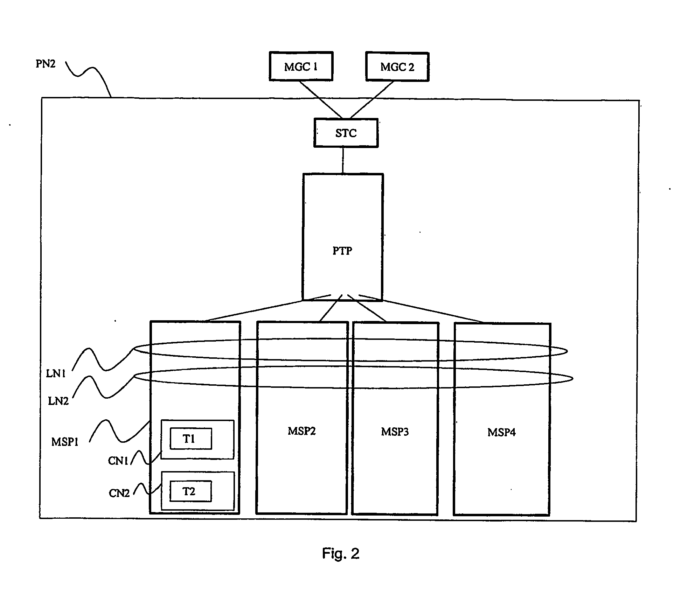

Figure 2 depicts a further network node PN2 providing bearer connectivity within a telecommunications network in that call control and bearer connectivity are separated. The further network node PN2 can be for example a Media Gateway. Furthermore figure 2 depicts a first and second call control node MGC1 and MGC2 that are adapted to control the further network node and to reserve resources in the further network node PN2. The first and the second call control node MGC1 and MGC2 can be e.g. a Media Gateway Controller or an MSC Server.

The further network node PN2 is implemented as a distributed system comprising a first, a second, a third, and a fourth processing device MSP1, MSP2, MSP3, and MSP4. The processing devices can be e.g. processor boards or processing units adapted to create or reserve resources for bearers. Furthermore the further network node PN2 comprises a distribution unit PTP that is adapted to distribute the reservation or creation of resources between the first, the second, the third, and the fourth processing device MSP1, MSP2, MSP3, and MSP4.

The further network node PN2 is connected to the first and to the second call control node MGC1 and MGC2 via an interface STC.

The further network node may host a first and a second logical node LN1 and LN2 that are utilizing the software resources of the further network node PN2 and the hardware resources of the further network node PN2 such as the distribution unit PTP and the first, the second, the third, and the fourth processing device MSP1, MSP2, MSP3, and MSP4.

The further network node PN2 is adapted to receive via the interface PTP a message requesting creating or reserving resources e.g. resources used when setting up a bearer. In the case of the first and the second logical network node said resources may be resources dedicated to said first or the second logical node LN2. According to the reception of a first message requesting creating or reserving one or more first resources, the requested resources are created or reserved, e.g. for the first logical node LN1, Said resources are e.g. a bearer termination or a context for one or more bearer terminations containing a created bearer termination. For that the processing device on that the resources are physically created or reserved is selected by the distribution unit PTP.

In the depicted example the first processing device MSP1 is chosen for the creation or reservation of the one or more first resources e.g. for the first logical node LN1. The one or more first resources, in the depicted example a first bearer termination T1 and a first context CN1 containing the first bearer termination T1, are created on the first processing device MSP1. The message requesting the creation or reservation of the one or more first resources comprises an indication of a connection or the bearer to be set up. The distribution unit PTP stores an identification of the created or reserved resources such that they are accessible via the identification of the connection or the bearer to be set up.

Similarly, according to the reception of a second message requesting a creation or a reservation of one or more second resources, the requested one or more second resources are created or reserved, and in the case of the multiple logical nodes the one or more second resources are assigned to the second logical node LN2. Said resources are e.g. a bearer termination or a context for one or more bearer terminations containing the created bearer termination. The second call control message comprises the identification of the bearer or the connection to be set up. The processing device on that the one or more second resources are physically created or reserved is selected by the distribution unit PTP. To that end already stored identification for connections or bearers are looked up by the distribution unit PTP and, if a matching identification for a connection or a bearer is found, the respective processing device on that resources have been reserved or created is determined, in the depicted example the first processing device MSP1. The determined processing device is chosen for the reservation or the creation of the one or more second resources. The one or more second resources, in the depicted example a second bearer termination T2 and a second context CN2 containing the second bearer termination, are created on the first processing device MSP1. Upon creation of the first and the second bearer termination T1 and T2 on the first processing device MSP1, the first and the second bearer termination T1 and T2 are connected using an internal connection of the first processing device MSP1. In the case of the multiple logical nodes this may comprise connecting the first and the second logical node LN1, LN2 using a bearer, where in fact only resources internal to the first processing device are used for that bearer.

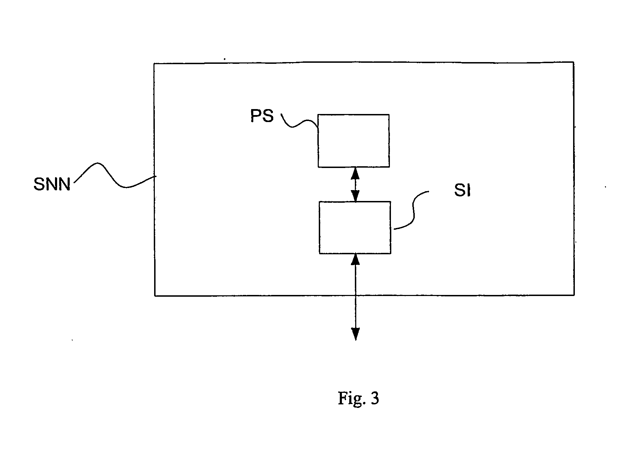

Figure 3 depicts a call control node SNN for controlling establishing a connection in a telecommunications network in that call control and bearer connectivity are separated. The call control node SNN comprises a processing device PS for processing and generating messages and one or more signaling interfaces SI towards one or more network nodes for providing bearer connectivity within the telecommunications network. The processing device PS is adapted to determine during a connection set up an identification of the connection and to send via the signaling interface a first message requesting a creation or a reservation of a first resource, e.g. a bearer termination, and a second message requesting a creation or a reservation of a second resource, e.g. a second bearer termination, towards the one or more network nodes, the first and the second message comprising the identification of the connection.

## Claims

1. Method for controlling establishing a connection in a telecommunications network in that call control and bearer connectivity are separated, the method being performed by a call control node (SNN), and the method comprising the steps of:
- determining an identification of the connection,
- sending a first message requesting a creation or a reservation of a first resource and a second message requesting a creation or a reservation of a second resource to a plurality of logical nodes providing bearer connectivity within the telecommunications network, the first and the second message comprising the identification of the connection, wherein the first message is sent towards a first of the plurality of logical nodes and the second message is sent towards a second of the plurality of logical nodes.

2. Method for establishing a connection in a telecommunications network in that call control and bearer connectivity are separated, the telecommunications network comprising a plurality of logical nodes (LN1; LN2) providing bearer connectivity within the telecommunications network, wherein the plurality of logical nodes (LN2; LN2) are implemented on a common physical node (NN1; PN2), and wherein the method comprises the steps of:
- receiving a first message requesting a creation or a reservation of a first resource (CN1; T1) and a second message requesting a creation or a reservation of a second resource (CN2; T2), the first and the second message comprising an identification of the connection,
- creating or reserving the first (CN1; T1) and the second resource (CN2; T2),
- comparing the identification received in the first message with the identification received in the second message, and
- according to the result of the comparison connecting the first and the second resource using a connection internal (CI) to the common physical node (NN1; PN2).

3. Method according to claim 2, wherein a first of the plurality of logical nodes (LN1; LN2) and a second of the plurality of logical nodes are implemented on the common physical node (PN2; NN1), wherein the first message is received in the first logical node (LN1), the second message is received in the second logical node (LN2), the first resource (CN1; T1) is created or reserved on the first logical node (LN1) and the second resource (CN2; T2) is created or reserved on the second logical node (LN2), and wherein the connecting the first (CN1; T1) and the second resource (CN2; T2) comprises connecting the first (LN1) and the second logical node (LN2).

4. Method according to claim 2 or 3, wherein the plurality of logical nodes (LN1; LN2) are implemented on a plurality of processing devices (MSP1; MSP2; MSP3; MSP4) of the common physical node (PN2), and wherein according to the result of the comparison the first and the second resource are created on the same processing device (MSP1).

5. Method according to any of the claims 2 - 4, wherein the first (CN1; T1) and the second resource (CN2; T2) are a first (CN1) and a second context (CN2) or a first (T1) and a second bearer termination (T2).

6. Call control node (SNN) for controlling establishing a connection in a telecommunications network in that call control and bearer connectivity are separated, the call control node comprising a processing device (PS) for processing and generating messages and one or more signalling interfaces (SI) towards a plurality of network nodes for providing bearer connectivity within the telecommunications network, wherein the processing device (PS) is adapted to determine during a connection set up an identification of the connection and to send a first message requesting a creation or a reservation of a first resource and a second message requesting a creation or a reservation of a second resource towards the plurality of network nodes wherein the first message is sent towards a first of the plurality of logical nodes and the second message is sent towards a second of the plurality of logical nodes, the first and the second message comprising the identification of the connection.

7. Call control node (SNN) according to claim 6, wherein the first and the second resource are a first and a second context or a first and a second bearer termination.

8. Network node (NN1; PN2) for providing bearer connectivity within a telecommunications network in that call control and bearer connectivity are separated, the network node (NN1; PN2) comprising a plurality of logical nodes (LN1; LN2), one or more interfaces for receiving call control messages for the plurality of logical nodes (LN1; LN2), a processing unit (PTP), and a comparison unit (PTP), the plurality of logical nodes being adapted to process a received first message requesting a creation or a reservation of a first resource (CN1; T1) and a received second message requesting a creation or a reservation of a second resource (CN2; T2), the first and the second message comprising an identification of a connection, the plurality of logical nodes further being adapted to create or reserve the first (CN1; T1) and the second resource (CN2; T2), the comparison unit (PTP) being adapted to compare the identification received in the first message with the identification received in the second message, and the processing unit (PTP) being adapted to connect the first (CN1; T1) and the second resource (CN2; T2) using a connection (MSP1; CI) internal to the network node according to the result of the comparison.

9. Network node (NN1; PN2) according to claim 8, on that a first (LN1) of the plurality of logical nodes and a second (LN2) of the plurality of logical nodes are implemented, wherein the first logical node (LN1) is adapted to process the first message and to create or reserve the first resource (CN1; T1) and the second logical node (LN2) is adapted to process the second message and to create or reserve the second resource (CN2; T2), and wherein the processing unit (PTP) is adapted to connect the first and the second logical node using a connection (C1; MSP1) internal to the network node according to the result of the comparison.

10. Network node (NN1; PN2) according to claim 8 or 9, comprising a plurality of processing devices (MSP1; MSP2; MSP3; MSP4) capable of creating or reserving resources and a selection unit (PTP) for selecting a processing device (MSP1) on that a requested resource (CN1; CN2; T1; T2) is created or reserved, wherein the selection unit (PTP) is adapted to select according to the result of the comparison a common processing device (MSP1) on that first (CN1; T1) and the second resource (CN2; T2) are created or reserved.

11. Network node (NN1; PN2) according to any of the claims 8 to 10, wherein the first (T1; CN1) and the second resource (T2; CN2) are a first (CN1) and a second context (CN2) or a first (T1) and a second bearer termination (T2).

## Patentansprüche

1. Verfahren zum Steuern der Herstellung einer Verbindung in einem Telekommunikationsnetz, in dem die Rufsteuerung und die Trägerkonnektivität getrennt sind, wobei das Verfahren durch einen Rufsteuerungsknoten (SNN) durchgeführt wird und das Verfahren die folgenden Schritte umfasst:
- Bestimmen einer Identifikation der Verbindung,
- Senden einer ersten Nachricht, die eine Erzeugung oder eine Reservierung eines ersten Betriebsmittels anfordert, und einer zweiten Nachricht, die eine Erzeugung oder eine Reservierung eines zweiten Betriebsmittels anfordert, an eine Mehrzahl von logischen Knoten, die Trägerkonnektivität innerhalb des Telekommunikationsnetzes bereitstellen, wobei die erste und die zweite Nachricht die Identifikation der Verbindung umfassen, die erste Nachricht an einen ersten der Mehrzahl von logischen Knoten gesendet wird und die zweite Nachricht an einen zweiten der Mehrzahl von logischen Knoten gesendet wird.

2. Verfahren zur Herstellung einer Verbindung in einem Telekommunikationsnetz, in dem die Rufsteuerung und die Trägerkonnektivität getrennt sind, wobei das Telekommunikationsnetz eine Mehrzahl von logischen Knoten (LN1; LN2) umfasst, die Trägerkonnektivität innerhalb des Telekommunikationsnetzes bereitstellen, die Mehrzahl von logischen Knoten (LN1; LN2) auf einem gemeinsamen physikalischen Knoten (NN1; PN2) implementiert ist und das Verfahren die folgenden Schritte umfasst:
- Empfangen einer ersten Nachricht, die eine Erzeugung oder eine Reservierung eines ersten Betriebsmittels (CN1; T1) anfordert, und einer zweiten Nachricht, die eine Erzeugung oder eine Reservierung eines zweiten Betriebsmittels (CN2; T2) anfordert, wobei die erste und die zweite Nachricht eine Identifikation der Verbindung umfassen,
- Erzeugen oder Reservieren des ersten (CN1; T1) und des zweiten Betriebsmittels (CN2; T2),
- Vergleichen der Identifikation, die in der ersten Nachricht empfangen wird, mit der Identifikation, die in der zweiten Nachricht empfangen wird, und
- Verbinden des ersten und des zweiten Betriebsmittels unter Verwendung einer Verbindung intern (CI) im gemeinsamen physikalischen Knoten (NN1; PN2) gemäß dem Ergebnis des Vergleichs.

3. Verfahren nach Anspruch 2, wobei ein erster der Mehrzahl von logischen Knoten (LN1; LN2) und ein zweiter der Mehrzahl von logischen Knoten auf dem gemeinsamen physikalischen Knoten (PN2; NN1) implementiert sind, wobei die erste Nachricht im ersten logischen Knoten (LN1) empfangen wird, die zweite Nachricht im zweiten logischen Knoten (LN2) empfangen wird, das erste Betriebsmittel (CN1; T1) auf dem ersten logischen Knoten (LN1) erzeugt oder reserviert wird und das zweite Betriebsmittel (CN2; T2) auf dem zweiten logischen Knoten (LN2) erzeugt oder reserviert wird, und wobei das Verbinden des ersten (CN1; T1) und des zweiten Betriebsmittels (CN2; T2) ein Verbinden des ersten (LN1) und des zweiten logischen Knotens (LN2) umfasst.

4. Verfahren nach Anspruch 2 oder 3, wobei die Mehrzahl von logischen Knoten (LN1; LN2) auf einer Mehrzahl von Verarbeitungsvorrichtungen (MSP1; MSP2; MSP3; MSP4) des gemeinsamen physikalischen Knotens (PN2) implementiert ist, und wobei gemäß dem Ergebnis des Vergleichs das erste und das zweite Betriebsmittel auf derselben Verarbeitungsvorrichtung (MSP1) erzeugt werden.

5. Verfahren nach einem der Ansprüche 2 bis 4, wobei das erste (CN1; T1) und das zweite Betriebsmittel (CN2; T2) ein erster (CN1) und ein zweiter Kontext (CN2) oder ein erster (T1) und ein zweiter Trägerabschluss (T2) sind.

6. Rufsteuerungsknoten (SNN) zum Steuern der Herstellung einer Verbindung in einem Telekommunikationsnetz, in dem die Rufsteuerung und die Trägerkonnektivität getrennt sind, wobei der Rufsteuerungsknoten eine Verarbeitungsvorrichtung (PS) zum Verarbeiten und Generieren von Nachrichten und eine oder mehr Signalisierungsschnittstellen (SI) zu einer Mehrzahl von Netzknoten zum Bereitstellen von Trägerkonnektivität innerhalb des Telekommunikationsnetzes umfasst, wobei die Verarbeitungsvorrichtung (PS) so ausgelegt ist, dass sie während eines Verbindungsaufbaus eine Identifikation der Verbindung bestimmt und eine erste Nachricht, die eine Erzeugung oder eine Reservierung eines ersten Betriebsmittels anfordert, und eine zweite Nachricht, die eine Erzeugung oder eine Reservierung eines zweiten Betriebsmittels anfordert, an die Mehrzahl von Netzknoten sendet, wobei die erste Nachricht an einen ersten der Mehrzahl von logischen Knoten gesendet wird und die zweite Nachricht an einen zweiten der Mehrzahl von logischen Knoten gesendet wird, wobei die erste und die zweite Nachricht die Identifikation der Verbindung umfassen.

7. Rufsteuerungsknoten (CNN) nach Anspruch 6, wobei das erste und das zweite Betriebsmittel ein erster und ein zweiter Kontext oder ein erster und ein zweiter Trägerabschluss sind.

8. Netzknoten (NN1; PN2) zum Bereitstellen von Trägerkonnektivität innerhalb eines Telekommunikationsnetzes, in dem die Rufsteuerung und die Trägerkonnektivität getrennt sind, wobei der Netzknoten (NN1; PN2) eine Mehrzahl von logischen Knoten (LN1; LN2), eine oder mehr Schnittstellen zum Empfangen von Rufsteuerungsnachrichten für die Mehrzahl von logischen Knoten (LN1; LN2), eine Verarbeitungseinheit (PTP) und eine Vergleichseinheit (PTP) umfasst, die Mehrzahl von logischen Knoten so ausgelegt ist, dass sie eine erste empfangene Nachricht, die eine Erzeugung oder eine Reservierung eines ersten Betriebsmittels (CN1; T1) anfordert, und eine empfangene zweite Nachricht, die eine Erzeugung oder eine Reservierung eines zweiten Betriebsmittels (CN2; T2) anfordert, verarbeitet, die erste und die zweite Nachricht eine Identifikation einer Verbindung umfassen, die Mehrzahl von logischen Knoten ferner so ausgelegt ist, dass sie das erste (CN1; T1) und das zweite Betriebsmittel (CN2; T2) erzeugt oder reserviert, die Vergleichseinheit (PTP) so ausgelegt ist, dass sie die Identifikation, die in der ersten Nachricht empfangen wird, mit der Identifikation, die in der zweiten Nachricht empfangen wird, vergleicht und die Verarbeitungseinheit (PTP) so ausgelegt ist, dass sie das erste (CN1; T1) und das zweite Betriebsmittel (CN2; T2) unter Verwendung einer netzknoteninternen Verbindung (MSP1; CI) gemäß dem Ergebnis des Vergleichs verbindet.

9. Netzknoten (NN1; PN2) nach Anspruch 1, auf dem ein erster (LN1) der Mehrzahl von logischen Knoten und ein zweiter (LN2) der Mehrzahl von logischen Knoten implementiert sind, wobei der erste logische Knoten (LN1) so ausgelegt ist, dass er die erste Nachricht verarbeitet und das erste Betriebsmittel (CN1; T1) erzeugt oder reserviert, und der zweite logische Knoten (LN2) so ausgelegt ist, dass er die zweite Nachricht verarbeitet und das zweite Betriebsmittel (CN2; T2) erzeugt oder reserviert, und wobei die Verarbeitungseinheit (PTP) so ausgelegt ist, dass sie den ersten und den zweiten logischen Knoten unter Verwendung einer netzknoteninternen Verbindung (CI; MSP1) gemäß dem Ergebnis des Vergleichs verbindet.

10. Netzknoten (NN1; PN2) nach Anspruch 8 oder 9, umfassend eine Mehrzahl von Verarbeitungsvorrichtungen (MSP1; MSP2; MSP3; MSP4), die zum Erzeugen oder Reservieren von Betriebsmitteln imstande sind, und eine Auswahleinheit (PTP) zum Auswählen einer Verarbeitungsvorrichtung (MSP1), auf der ein angefordertes Betriebsmittel (CN1; CN2; T1; T2) erzeugt oder reserviert wird, wobei die Auswahleinheit (PTP) so ausgelegt ist, dass sie gemäß dem Ergebnis des Vergleichs eine gemeinsame Verarbeitungsvorrichtung (MSP1) auswählt, auf der das erste (CN1; T1) und das zweite Betriebsmittel (CN2; T2) erzeugt oder reserviert werden.

11. Netzknoten (NN1; PN2) nach einem der Ansprüche 8 bis 10, wobei das erste (CN1; T1) und das zweite Betriebsmittel (CN2; T2) ein erster (CN1) und ein zweiter Kontext (CN2) oder ein erster (T1) und ein zweiter Trägerabschluss (T2) sind.

## Revendications

1. Procédé pour commander l'établissement d'une connexion dans un réseau de télécommunication en ce que la commande d'appel et la connectivité de support sont séparées, le procédé étant exécuté par un noeud de commande d'appel (SNN) et le procédé comprenant les étapes consistant à :
- déterminer une identification de la connexion,
- envoyer un premier message demandant une création ou une réservation d'une première ressource et un second message demandant une création ou une réservation d'une seconde ressource vers une pluralité de noeuds logiques fournissant une connectivité de support à l'intérieur du réseau de télécommunication, le premier et le second message comprenant l'identification de la connexion, dans lequel le premier message est envoyé vers un premier de la pluralité de noeuds logiques et le second message est envoyé vers un second de la pluralité de noeuds logiques.

2. Procédé pour établir une connexion dans un réseau de télécommunication, en ce que la commande d'appel et la connectivité de support sont séparées, le réseau de télécommunication comprenant une pluralité de noeuds logiques (LN1 ;LN2) fournissant une connectivité de support à l'intérieur du réseau de télécommunication, dans lequel la pluralité de noeuds logiques (LN1 ;LN2) sont implémentés sur un noeud physique commun (NN1 ;PN2) et dans lequel le procédé comprend les étapes consistant à :
- recevoir un premier message demandant une création ou une réservation d'une première ressource (CN1 ;T1) et un second message demandant une création ou une réservation d'une seconde ressource (CN2 ;T2), le premier et le second message comprenant une identification de la connexion,
- créer ou réserver la première (CN1 ;T1) et la seconde ressource (CN2 ;T2),
- comparer l'identification reçue dans le premier message avec l'identification reçue dans le second message, et
- en fonction du résultat de la comparaison, connecter la première et la seconde ressource en utilisant une connexion interne (CI) au noeud physique commun (NN1 ;PN2).

3. Procédé selon la revendication 2, dans lequel un premier de la pluralité de noeuds logiques (LN1 ;LN2) et un second de la pluralité de noeuds logiques sont implémentés sur le noeud physique commun (PN2 ;NN1), dans lequel le premier message est reçu dans le premier noeud logique (LN1), le second message est reçu dans le second noeud logique (LN2), la première ressource (CN1 ;T1) est créée ou réservée sur le premier noeud logique (LN1) et la seconde ressource (CN2 ;T2) est créée ou réservée sur le second noeud logique (LN2) et dans lequel la connexion de la première (CN1 ;T1) et de la seconde ressource (CN2 ;T2) comprend la connexion du premier (LN1) et du second noeud logique (LN2).

4. Procédé selon la revendication 2 ou 3, dans lequel la pluralité de noeuds logiques (LN1 ;LN2) sont implémentés sur une pluralité de dispositifs de traitement (MSP1 ;MSP2 ;MSP3 ;MSP4) du noeud physique commun (PN2, et dans lequel en fonction du résultat de la comparaison, la première et la seconde ressource sont créées sur le même dispositif de traitement (MSP1).

5. Procédé selon une quelconque des revendications 2 à 4, dans lequel la première (CN1 ;T1) et la seconde ressource (CN2 ;T2) sont un premier (CN1) et un second contexte (CN2) ou une première (T1) et une seconde terminaison de support (T2).

6. Noeud de commande d'appel (SNN) pour commander l'établissement d'une connexion dans un réseau de télécommunication en ce que la commande d'appel et la connectivité de support sont séparées, le noeud de commande d'appel comprenant un dispositif de traitement (PS) pou traiter et générer des messages et une ou des interfaces de signalisation (SI) vers une pluralité de noeuds de réseau pour fournir une connectivité de support à l'intérieur du réseau de télécommunication, dans lequel le dispositif de traitement (PS) est adapté afin de déterminer pendant une établissement de connexion une identification de la connexion et d'envoyer un premier message demandant une création ou une réservation d'une première ressource et un second message demandant une création ou une réservation d'une seconde ressource vers la pluralité de noeuds de réseau, dans lequel le premier message est envoyé vers un premier de la pluralité de noeuds logiques et le second message est envoyé vers un second de la pluralité de noeuds logiques, le premier et le second message comprenant l'identification de la connexion.

7. Noeud de commande d'appel (SNN) selon la revendication 6, dans lequel la première et la seconde ressource sont un premier et un second contexte ou une première et une seconde terminaison de support.

8. Noeud de réseau (NN1 ;PN2) pour fournir une connectivité de support à l'intérieur d'un réseau de télécommunication en ce que la commande d'appel et la connectivité de support sont séparées, le noeud de réseau (NN1 ;PN2) comprenant une pluralité de noeuds logiques (LN1 ;LN2), une ou des interfaces pour recevoir des messages de commande d'appel pour la pluralité de noeuds logiques (LN1 ;LN2), une unité de traitement (PTP) et une unité de comparaison (PTP), la pluralité de noeuds logiques étant adaptés afin de traiter un premier message reçu demandant une création ou une réservation d'une première ressource (CN1 ;T1) et un second message reçu demandant une création ou une réservation d'une seconde ressource (CN2 ;T2), le premier et le second message comprenant une identification d'une connexion, la pluralité de noeuds logiques étant en outre adaptée afin de créer ou réserver la première (CN1 ;T1) et la seconde ressource (CN2 ;T2), l'unité de comparaison (PTP) étant adaptée afin de comparer l'identification reçue dans le premier message avec l'identification reçue dans le second message, et l'unité de traitement (PTP) étant adaptée afin de connecter la première (CN1 ;T1) et la seconde ressource (CN2 ;T2) en utilisant une connexion (MSP1 ;C1) interne au noeud de réseau en fonction du résultat de la comparaison.

9. Noeud de réseau (NN1 ;PN2) selon la revendication 8, sur lequel un premier (LN1) de la pluralité de noeuds logiques et un second (LN2) de la pluralité de noeuds logiques sont implémentés, dans lequel le premier noeud logique (LN1) est adapté afin de traiter le premier message et de créer ou réserver la première ressource (CN1 ;T1) et le second noeud logique (LN2) est adapté afin de traiter le second message et de créer ou réserver la seconde ressource (CN2 ;T2), et dans lequel l'unité de traitement (PTP) est adapté afin de connecter le premier et le second noeud logique en utilisant une connexion (C1 ;MSP1) interne au noeud de réseau en fonction du résultat de la comparaison.

10. Noeud de réseau (NN1 ; PN2) selon la revendication 8 ou 9, comprenant une pluralité de dispositifs de traitement (MSP1 ;MSP2 ;MSP3 ;MSP4) capables de créer ou réserver des ressources et une unité de sélection (PTP) pour sélectionner un dispositif de traitement (MSP1) sur lequel une ressource demandée (CN1 ; CN2 ; T1 ; T2) est crée ou réservée, dans lequel l'unité de sélection (PTP) est adaptée afin de sélectionner en fonction des résultats de la comparaison un dispositif de traitement commun (MSP1) sur lequel la première (CN1 ;T1) et la seconde ressource (CN2 ;T2) sont créées ou réservées.

11. Noeud de réseau (NN1 ;PN2) selon une quelconque des revendications 8 à 10, dans lequel la première (T1 ;CN1) et la seconde ressource (T2 ;CN2) sont un premier (CN1) et un second contexte (CN2) ou une première (T1) et une seconde terminaison de support (T2).
